# EUROPEAN PATENT APPLICATION

(11) **EP 1 975 820 A1**
(43) Date of publication of application: **01.10.2008**
(21) Application number: 08005691.4
(22) Date of filing: 26.03.2008
(51) Int. Cl.: G06F 17/30

(54) **Web services intermediary for sharing a single key**

(30) Priority: 26.03.2007 US 691336
(71) Applicant: SYMANTEC CORPORATION, Cupertino, CA 95014 (US)
(72) Inventor: Viljoen, Pieter, Redondo Beach CA 90278 (US); Cooley, Shaun, El Segundo CA 90245 (US)
(74) Representative: Zinkler, Franz

(57) **Abstract**

A proxy operates as an interface between application programs and web services. Each application uses an assigned ID key pair to interface with the proxy. The proxy itself uses a genuine ID/key pair for calling actual web services. Because only the proxy has the real web service key, that key remains secure and confidential. The proxy can filter the web service input and/or output as desired.

## Description

### Technical Field

This invention pertains generally to web services, and more specifically to using a proxy as an intermediary between web services and end-user applications.

### Background Art

The recent availability of new web service tools such as SOAP, WSDL, XML-RPC etc. has enabled rapid development and roll-out of complicated web service functionality. Prior to the availability of such tools, large web service projects such as online backup, central queuing, online product pricing, image storage and retrieval and online searching took long amounts of time, large programming teams and substantial financial investments to develop. As a result of the simplified development enabled by the new tools, more web services are available to end-users today.

It would be desirable to publishers of software applications to be able to provide these web services from within their applications. These web services, provided by companies such as Amazon and Google, generally require that the client have a unique identifier ("ID") and a secret key that is to be included in or used to sign the service calls. It is not practical for software publishers to require that each of the millions of customers using their products obtain their own web service account with the provider. It is also undesirable from a business point of view, as the software application provider may want their customers to believe, for marketing purposes, that the web service is part of the application.

One solution would be for the software publisher to obtain a single key for a given web service, and use that key to call the service from each instantiation of the application on each customer's computer. Unfortunately, including the key in each copy of the application would make it impossible to secure this key in a way that would keep it confidential. Since each call to a web service typically results in a charge, publishers certainly do not want their key to become accessible to the general public. If that were to happen, dishonest parties could use the publisher's key to call the web service from contexts outside of the publisher's software, at the publisher's expense.

Additionally, using a web service from within an application involves exchanging data between the application and the web service. Since the publisher is responsible for the application, it would be desirable for the publisher to be able to filter such data, to ensure that it is secure or to add services as desired.

What is needed are methods, computer readable media and computer systems that allow a software publisher to call web services from within their applications, without compromising the security of their key. It would also be desirable if the publishers could filter content passed between their applications and the web services.

### Summary

A proxy operates as an interface between application programs and web services. Each application uses a unique ID and key assigned by the publisher to interface with the proxy. The proxy itself uses a single, genuine ID/key pair for calling actual web services. Because only the proxy has the real web service key, that key remains secure and confidential.

The proxy receives requests for web services made by applications running on end-user's computers. The proxy is configured to handle these web services requests, using the same well defined Application Programming Interfaces ("APIs") that the real web services use. The calls to the web services are made by the application programs using customer-unique software publisher generated ID/key pairs. The proxy then makes corresponding calls to the real web services, using the software publisher's own, genuine ID/key pair, and passes the results back to the applications.

The use of the proxy also allows filtering of the APIs input and output (parameters and/or data), for example to ensure end-users can only access the information they are authorized to see. Additionally, the proxy can provide value added services, such as scanning the data for malicious code, additional authentication or non-repudiation of the data, and/or other filtering operations as desired. These mechanisms can be used to filter the input and output of any web service.

The features and advantages described in this summary and in the following detailed description are not all-inclusive, and particularly, many additional features and advantages will be apparent to one of ordinary skill in the relevant art in view of the drawings, specification, and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### Brief Description of the Drawings

Figure 1 is a block diagram illustrating the operations of a web service proxy, according to some embodiments of the present invention.

Figure 2 is a block diagram illustrating the operations of a key pair generation tool, according to some embodiments of the present invention.

Figure 3 is a block diagram illustrating the filtering of web service input and output, according to some embodiments of the present invention.

The Figures depict embodiments of the present invention for purposes of illustration only. One skilled in the art will readily recognize from the following discussion that alternative embodiments of the structures and methods illustrated herein may be employed without departing from the principles of the invention described herein.

### Detailed Description

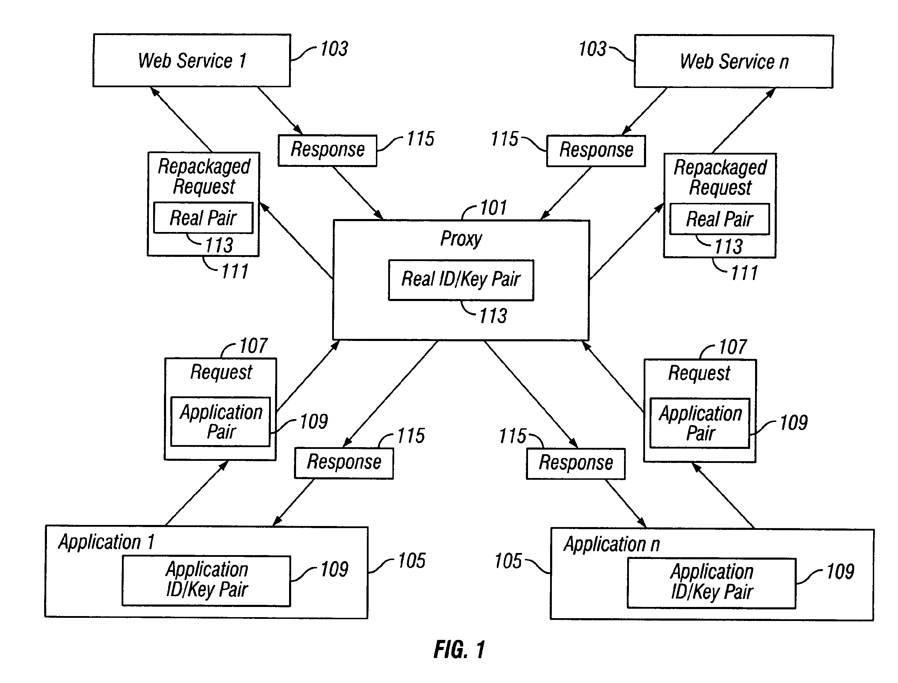

Figure 1 illustrates a web service proxy 101 acting as an interface between web services 103 and application programs 105, according to some embodiments of the present invention. It is to be understood that although the web service proxy 101 is illustrated in Figure 1 as a separate entity, as used herein the term "web service proxy" 101 refers a collection of functionalities which can be implemented as software, hardware, firmware or any combination of these. Where a component is implemented as software, it can be implemented as a standalone program, but can also be implemented in other ways, for example as part of a larger program, as a plurality of separate programs, as a kernel loadable module, as one or more device drivers or as one or more statically or dynamically linked libraries.

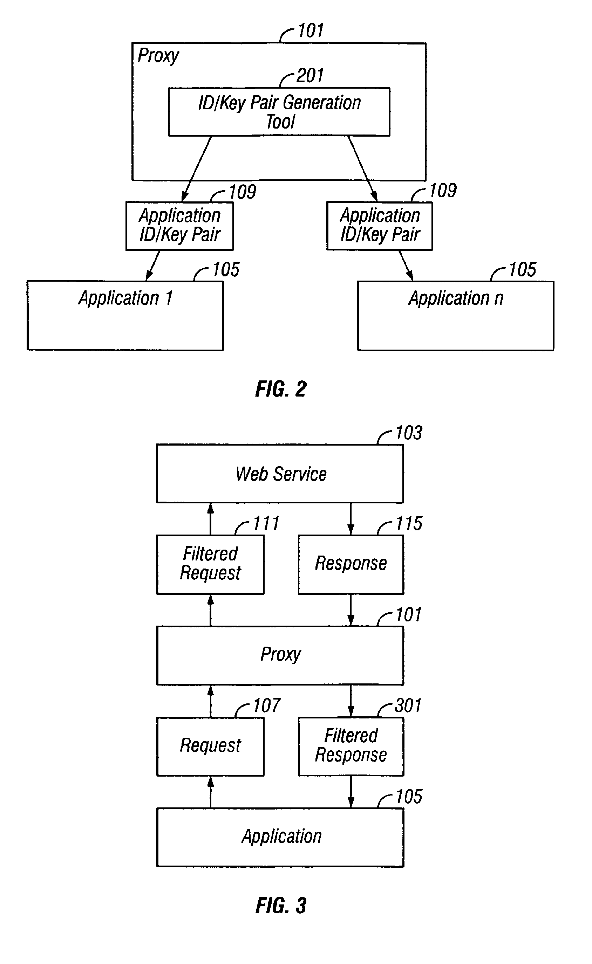

As illustrated in Figure 1, the proxy receives requests 107 from end-user applications 105 for web services 103. Each application 105 has a unique ID/key pair 109, which is either included in the request 107, or used to sign the request as appropriate. The assignment of these application ID/key pairs 109 is discussed in greater detail below, in conjunction with Figure 2.

The web service proxy 101 examines received requests 107. The proxy determines whether each received request 107 originates from a legitimate end-user application 105 that is authorized to make that particular web service request 107. Typically, the proxy keeps a list or the like of end-user applications 105 under its jurisdiction, their assigned ID/key pairs 109, and the web services 103 that they are allowed to access. If the request 107 is validated, the web service proxy 101 forwards a repackaged (or resigned) request 111 to the target web service 103 with the appropriate genuine web service ID/key pair 113.

The web service proxy 101 receives a corresponding response 115 from the web service 103 to which the repackaged request 111 was sent. The web service proxy 101 then transmits the received response 115 to the appropriate end-user application 105 that made the original request 107. As explained in greater detail below in conjunction with Figure 3, the web service proxy 101 can also filter, repackage and/or resign responses 115 as desired. As illustrated in Figure 1, the web service proxy 101 functions both as the keeper of the real web service ID/key pairs 113, and the validator of requests 107 made by end-user applications 105.

It is to be understood that the web service proxy 101 can be centralized or distributed, and can run on one or more servers, clients or any other type of computing devices. It is to be further understood that the web services 103 in question have well defined Application Programming Interfaces (APIs), so that the application programs 105 can easily generate requests 107 thereto, and the proxy can create corresponding repackaged or resigned requests 111. For example, web services 103 that use WSDL, SOAP, or XML-RPC (e.g., Amazon and Google web services) have well defined APIs.

Turning now to Figure 2, an ID/key pair generation tool 201 is illustrated, according to some embodiments of the present invention. It is to be understood that although the ID/key pair generation tool 201 is illustrated as a single entity instantiated within the proxy 101, the ID/key pair generation tool 201, like the web service proxy 101, represents a collection of functionalities. The generation tool 201 generates unique ID/key pairs 109 for use by end-user applications 103. An end-user application ID/key pair 109 could pertain to an existing account the end-user has with the application publisher, or could be, for example, randomly generated or assigned at the time of installation or first-use.

In some embodiments, each end-user application 105 is assigned a single ID/key pair 109 for all web services 103. In other embodiments, an application 105 is assigned a different ID/key pair 109 for each web service 103. Either way, these ID/key pairs 109 are only for use between the web services proxy 101 and the end-user 105. Depending upon the form of the request 107 expected by the web service, an end-user ID/key pair 109 can be either included in the request 107 itself, or used to sign the request 107 as appropriate.

It is to be understood that the term "ID/key pair" as used herein refers to whatever type of identifying and/or verification data is required by individual web services 103. As such, even where a web service 103 requires such data in a form other than a literal pairing of an identifier and a key (e.g., a key only, a user name and a password, a pair of keys, etc.), the term "ID/key pair" as used herein still encompasses such scenarios.

As illustrated in Figure 3, the web services proxy 101 can filter, repackage and/or resign requests 107 from application programs 105 and responses 115 from web services 103 as desired. The specific processing to execute is dependent upon the web service 103 in question, and upon what value added services to provide, if any. For example, requests 107 received by the proxy 101 are repackaged and/or resigned such that they in the format expected by the target web service 103. Response data 115 received back from a web service 103 can be scanned for malicious code, compressed, encrypted, screened for content, or otherwise filtered as desired. The filtered response 301 is then transmitted to the appropriate application 105. The implementation mechanics of repackaging, resigning and filtering data are known to those of ordinary skill in the relevant art, and their application within the context of the present invention will be readily apparent to those of such a skill level in light of this specification. For example, Extensible Stylesheet Markup Language (XSL) or configuration files can be used to transform and filter input and output per web service 103 as desired.

To clarify the operation of an embodiment of the present invention, the use of a web service proxy 101 as an intermediary between an on-line backup end-user application 105 and Amazon's Simple Storage Service (S3) (an example of a web service 103) is described.

The publisher of the on-line backup application 105 creates an S3 account, and obtains a genuine API ID and secret key 113. The key pair generation tool 201 is configured to use the S3-ID/key pair 113 to generate end-user ID/key pairs 109. During installation of the on-line backup program 105 at an end-user site, the proxy 101 is contacted, and the generation tool 201 issues an ID/key pair 109 for the installed application program 105 (for example, ID=123, Key=ABC).

During its course of operation, the installed end-user application 105 issues requests 107 to the proxy 101, using its assigned ID/key pair 109. The requests 107 are filtered and repackaged by the proxy 101. The proxy then sends the filtered request 111 to the Amazon web service 103. Responses 115 from the web service 103 are received by the proxy 101, filtered and repackaged prior to being returned to the end-user application 105.

To better illustrate possible filtering activities, some specific examples within the context of S3 are provided. In one embodiment, when storing files being sent to or received from user applications 105, the proxy 101 could modify the filename to, e.g., "123-<original-file-name>". The proxy 101 could then enforce size restrictions for all files named 123-*, based on the storage quotas allocated to various end-users 105.

As an extension to the above example, when an end-user 105 is browsing files, the proxy 101 could filter the provided view to include only files that begin with "123-". For readability the proxy could strip the 123-designation from the data viewable by the end-user 105. Further, when retrieving or deleting files, the end-user 105 could only be given access to those named 123-*. Of course, these are only examples of filtering operations that are possible. Other examples will be readily apparent to those of ordinary skill in the relevant art in light of this specification.

The publisher could also charge small, per transaction, fees to third parties wanting to use the services 103, making the publisher the trusted intermediary in web service 103 communications.

As will be understood by those familiar with the art, the invention may be embodied in other specific forms without departing from the spirit or essential characteristics thereof. Likewise, the particular naming and division of the portions, modules, agents, managers, components, functions, procedures, actions, layers, features, attributes, methodologies and other aspects are not mandatory or significant, and the mechanisms that implement the invention or its features may have different names, divisions and/or formats. Furthermore, as will be apparent to one of ordinary skill in the relevant art, the portions, modules, agents, managers, components, functions, procedures, actions, layers, features, attributes, methodologies and other aspects of the invention can be implemented as software, hardware, firmware or any combination of the three. Of course, wherever a component of the present invention is implemented as software, the component can be implemented as a script, as a standalone program, as part of a larger program, as a plurality of separate scripts and/or programs, as a statically or dynamically linked library, as a kernel loadable module, as a device driver, and/or in every and any other way known now or in the future to those of skill in the art of computer programming. Additionally, the present invention is in no way limited to implementation in any specific programming language, or for any specific operating system or environment. Furthermore, it will be readily apparent to those of ordinary skill in the relevant art that where the present invention is implemented in whole or in part in software, the software components thereof can be stored on computer readable media as computer program products. Any form of computer readable medium can be used in this context, such as magnetic or optical storage media. Additionally, software portions of the present invention can be instantiated (for example as object code or executable images) within the memory of any programmable computing device. Accordingly, the disclosure of the present invention is intended to be illustrative, but not limiting, of the scope of the invention, which is set forth in the following claims.

## Claims

1. A computer implemented method for providing web services to applications, the method comprising the steps of:
receiving at least one request for at least one web service from at least one application, each received request being associated with an application ID/key pair;
un-associating at least one received request from its application ID/key pair, and associating it with an appropriate, genuine, web service ID/key pair;
transmitting at least one request to at least one web service;
receiving at least one response from at least one web service; and
transmitting at least one received response to an appropriate application.

2. The method of claim 1 further comprising:
for at least one received request, determining whether that received request originates from a legitimate application that is authorized to make the request; and
performing at least one step from a group of steps consisting of:
responsive to determining that the originating application is authorized to make the request, configuring a corresponding request and transmitting it to a web service, and receiving a response and transmitting it to an application;
responsive to determining that the originating application is not authorized to make the request, not transmitting a corresponding request to a web service;
responsive to determining that the originating application is not authorized to make the request, configuring and modifying a corresponding request and transmitting it to a web service, and receiving a response and transmitting it to an application;
responsive to determining that the originating application is not authorized to make the request, configuring and modifying a corresponding request and transmitting it to a web service, receiving a response, and modifying the response and transmitting it to an application; and
responsive to determining that the originating application is not authorized to make the request, configuring a corresponding request and transmitting it to a web service, receiving a response, and modifying the response and transmitting it to an application.

3. The method of claim 1 further comprising:
generating at least one application ID/key pair; and
assigning at least one generated application ID/key pair to at least one application.

4. The method of claim 3 further comprising performing at least one step from a group of steps consisting of:
generating and assigning one application ID/key pair per application; and
generating and assigning one application ID/key pair per application per web service.

5. The method of claim 1 further comprising:
filtering at least one received request.

6. The method of claim 5 wherein filtering at least one received request further comprises performing at least one step from a group of steps consisting of:
repackaging a received request;
resigning a received request;
reformatting a received request;
encrypting a received request;
compressing a received request;
redacting a received request;
adding data to a received request;
scanning a received request for malicious code; and
screening a received request for content.

7. The method of claim 1 further comprising:
filtering at least one received response.

8. The method of claim 8 wherein filtering at least one received response further comprises performing at least one step from a group of steps consisting of:
repackaging a received response;
resigning a received response;
reformatting a received response;
encrypting a received response;
compressing a received response;
redacting a received response;
adding data to a received response;
scanning a received response for malicious code; and
screening a received response for content.

9. At least one computer readable medium containing a computer program product for providing web services to applications, the computer program product comprising:
program code for receiving at least one request for at least one web service from at least one application, each received request being associated with an application ID/key pair;
program code for un-associating at least one received request from its application ID/key pair, and associating it with an appropriate, genuine, web service ID/key pair;
program code for transmitting at least one request to at least one web service;
program code for receiving at least one response from at least one web service; and
program code for transmitting at least one received response to an appropriate application.

10. The computer program product of claim 9 further comprising:
program code for, for at least one received request, determining whether that received request originates from a legitimate application that is authorized to make the request; and
program code for performing at least one step from a group of steps consisting of:
responsive to determining that the originating application is authorized to make the request, configuring a corresponding request and transmitting it to a web service, and receiving a response and transmitting it to an application;
responsive to determining that the originating application is not authorized to make the request, not transmitting a corresponding request to a web service;
responsive to determining that the originating application is not authorized to make the request, configuring and modifying a corresponding request and transmitting it to a web service, and receiving a response and transmitting it to an application;
responsive to determining that the originating application is not authorized to make the request, configuring and modifying a corresponding request and transmitting it to a web service, receiving a response, and modifying the response and transmitting it to an application; and
responsive to determining that the originating application is not authorized to make the request, configuring a corresponding request and transmitting it to a web service, receiving a response, and modifying the response and transmitting it to an application.

11. The computer program product of claim 9 further comprising:
program code for generating at least one application ID/key pair; and
program code for assigning at least one generated application ID/key pair to at least one application.

12. The computer program product of claim 11 further comprising program code for performing at least one step from a group of steps consisting of:
generating and assigning one application ID/key pair per application; and
generating and assigning one application ID/key pair per application per web service.

13. The computer program product of claim 9 further comprising:
program code for filtering at least one received request.

14. The computer program product of claim 13 wherein the program code for filtering at least one received request further comprises program code for performing at least one step from a group of steps consisting of:
repackaging a received request;
resigning a received request;
reformatting a received request;
encrypting a received request;
compressing a received request;
redacting a received request;
adding data to a received request;
scanning a received request for malicious code; and
screening a received request for content.

15. The computer program product of claim 9 further comprising:
program code for filtering at least one received response.

16. The computer program product of claim 15 wherein the program code for filtering at least one received response further comprises program code for performing at least one step from a group of steps consisting of:
repackaging a received response;
resigning a received response;
reformatting a received response;
encrypting a received response;
compressing a received response;
redacting a received response;
adding data to a received response;
scanning a received response for malicious code; and
screening a received response for content.

17. A computer system for providing web services to applications, the computer system comprising:
means for receiving at least one request for at least one web service from at least one application, each received request being associated with an application ID/key pair;
means for un-associating at least one received request from its application ID/key pair, and associating it with an appropriate, genuine, web service ID/key pair;
means for transmitting at least one request to at least one web service;
means for receiving at least one response from at least one web service; and
means for transmitting at least one received response to an appropriate application.

18. The computer system of claim 17 further comprising:
means for, for at least one received request, determining whether that received request originates from a legitimate application that is authorized to make the request; and
means for performing at least one step from a group of steps consisting of:
responsive to determining that the originating application is authorized to make the request, configuring a corresponding request and transmitting it to a web service, and receiving a response and transmitting it to an application;
responsive to determining that the originating application is not authorized to make the request, not transmitting a corresponding request to a web service;
responsive to determining that the originating application is not authorized to make the request, configuring and modifying a corresponding request and transmitting it to a web service, and receiving a response and transmitting it to an application;
responsive to determining that the originating application is not authorized to make the request, configuring and modifying a corresponding request and transmitting it to a web service, receiving a response, and modifying the response and transmitting it to an application; and
responsive to determining that the originating application is not authorized to make the request, configuring a corresponding request and transmitting it to a web service, receiving a response, and modifying the response and transmitting it to an application.

19. The computer system of claim 17 further comprising:
means for generating at least one application ID/key pair; and
means for assigning at least one generated application ID/key pair to at least one application.

20. The computer system of claim 17 further comprising:
means for filtering at least one received request; and
means for filtering at least one received response.
